# EUROPÄISCHE PATENTSCHRIFT

(11) **EP 2 535 662 B1**
(45) Veröffentlichungstag und Bekanntmachung des Hinweises auf die Patenterteilung: **21.08.2013**
(21) Anmeldenummer: 11170214.8
(22) Anmeldetag: 16.06.2011
(51) Int. Cl.: F24J 2/54

(54) **Solarreflektor mit hydraulischer Verstellvorrichtung**
Solar reflector with hydraulic adjustment device
Réflecteur solaire doté d'un dispositif de réglage hydraulique

(43) Veröffentlichungstag der Anmeldung: 19.12.2012
(73) Patentinhaber: HAWE Hydraulik SE, 81673 München (DE)
(72) Erfinder: Neumair, Georg, 85402 Thalhausen (DE); Hundschell, Hilarius, 84424 Isen (DE)
(74) Vertreter: Grünecker, Kinkeldey, Stockmair & Schwanhäusser

(56) Entgegenhaltungen:
- EP-A1- 2 226 592
- WO-A1-2009/087257
- DE-A1-102006 040 962

## Beschreibung

Die Erfindung betrifft einen Solarreflektor der im Oberbegriff des Patentanspruchs 1 angegebenen Art.

Bei einem aus WO 2009/087257 A bekannten Solarreflektor in Form einer Solarrinne weist die hydraulische Verstellvorrichtung ein Sicherheitssystem mit einem Druckspeicher auf, um bei einem Stromausfall den auf die Sonne ausgerichteten Parabolspiegel über einen Notfallschritt in Richtung Osten zu verstellen, damit das Absorberrohr mit dem Wärmeträgermedium im Brennpunktbereich des Parabolspiegels keinen Schaden erleidet. Da der Gesamtverstellbereich des Parabolspiegels durchaus mehr als 180° betragen kann, werden zwei versetzt angelenkte Hydrozylinder benötigt. Grundsätzlich werden bei jedem Verstellschritt zur Nachführung des Parabolspiegels nach dem Sonnenstand beide Hydrozylinder beaufschlagt, wobei sie während eines Sonnentages entsprechend der versetzten Anlenkung jeweils einen Umkehrbereich durchfahren. Innerhalb des Umkehrbereiches hat der jeweilige Hydrozylinder in Bezug auf die Drehachse des Parabolspiegels einen sehr kurzen oder gar keinen Hebelarm, so dass seine Arbeitskraft nur wenig oder gar nicht zur Verstellung beiträgt, sondern hauptsächlich das Lager des Parabolspiegels belastet. Dies hat in der Praxis gezeigt, dass es nach relativ kurzer Zeit, z.B. innerhalb eines Jahres, zu einem Lagerschaden kommen kann.

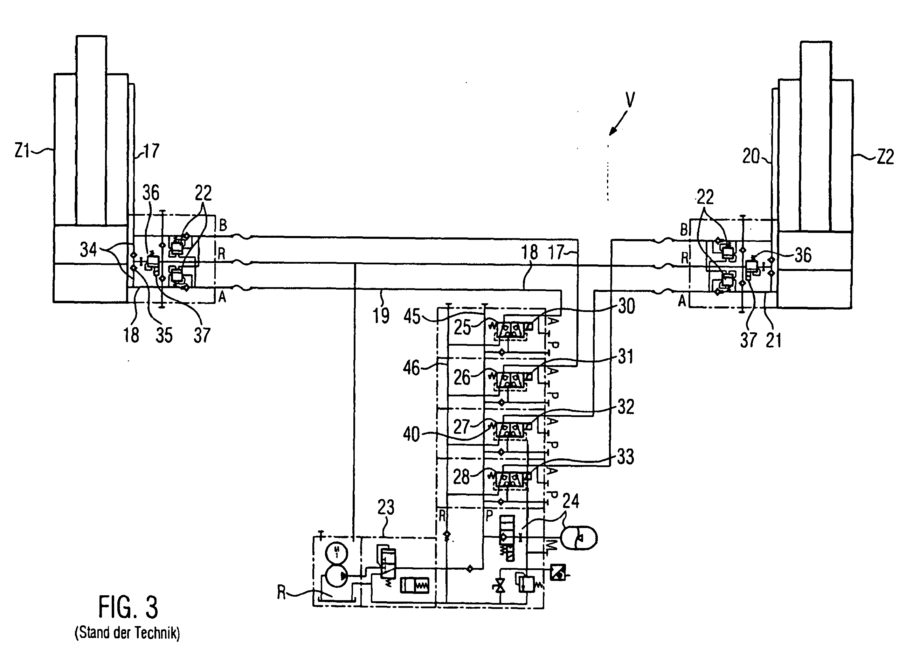

Bei Solarrinnen in einem Solarkraftwerk in Spanien, das für eine Leistung von etwa 50 MW ausgelegt und seit Jahren in Betrieb ist, wird die jeweilige hydraulische Verstellvorrichtung einer Solarrinne zur Vermeidung solcher Lagerschäden so betrieben, dass zumindest im Umkehrbereich jedes Hydrozylinders (wenn dieser vom Einfahren auf Ausfahren oder umgekehrt umgeschaltet wird) oder sogar bei jedem Nachführschritt dieser Hydrozylinder freigeschaltet wird, der den ungünstigeren Hebelarm in Bezug auf die Drehachse des Parabolspiegels hat. Freigeschaltet bedeutet, dass beide Arbeitsleitungen mit dem Tank verbunden werden und der Hydrozylinder nicht mehr mit der Druckquelle in druckübertragender Verbindung ist. Wie an den hydraulischen Stellvorrichtungen dieser Solarrinnen zu sehen ist (Fig. 3, Stand der Technik), ist das Freischaltventil mit einem Betätiger in Form eines Proportionalmagneten zwischen einer Tankleitung und beiden Arbeitsleitungen des Hydrozylinders und zwischen dem Hydrozylinder und den Lasthalteventilen angeordnet, und sind als Richtungsventile für jeweils eine der vier Arbeitsleitungen vier 3/2-Wege-Sitzventile vorgesehen, deren jedes durch einen elektromagnetischen Betätiger gegen Federkraft in einer Schaltrichtung betätigt wird. Die vier 3/2-Wege-Sitzventile sind parallel an eine Tankleitung und eine Druckleitung angeschlossen und werden mit den Freischaltventilen über die Steuerung nach einer vorbestimmten Logik angesteuert. Obwohl dieses bekannte Prinzip für einen Nottallschritt auf eine Notstromversorgung angewiesen ist, und den Notfallschritt nicht ohne Notstrom autark auszuführen vermag, sind dennoch insgesamt sechs elektromagnetische Betätiger erforderlich, deren jeder, falls bestromt, über die gesamte Dauer eines Verstellschrittes des Parabolspiegels bestromt bleiben muss, so dass insgesamt der elektrische Leistungseigenbedarf der hydraulischen Verstellvorrichtung unzweckmäßig hoch ist, und die vielen Betätiger einer hohen Anzahl möglicher Fehlerquellen entspricht. Für solche Solarrinnen ist es neben der langen Funktionstüchtigkeit der Verstellvorrichtung nämlich eine Hauptanforderung, den elektrischen eigenen Leistungsbedarf so gering wie möglich zu halten, um einen hohen Wirkungsgrad bei der Energiegewinnung aus Sonnenenergie zu erzielen. Dieser Vorteil wird mit der gleichen Funktionalität der hydraulischen Verstellvorrichtung erzielt, wie sie bei der bekannten Solarrinne im Solarkraftwerk in Spanien gegeben ist.

Ferner wird auf die europäische Patentanmeldung mit dem Anmeldeaktenzeichen 10 197 159.6 vom 28.12.2010 veröffentlicht als EP 2 472 196 A1 mit älterem Zeitrang verwiesen, in welcher eine hydraulische Solarrinnen-Verstellvorrichtung, allerdings ohne Freischaltung der Hydrozylinder, vorgeschlagen wird, bei der nicht nur elektromagnetische Betätiger sondern zur Energieeinsparung auch mechanische Betätiger mit Kurvensteuerungen zum Schalten von Ventilen eingesetzt werden.

Weiterer Stand der Technik ist enthalten in EP 2 226 592 A1 und DE 10 2006 040 962 A1.

Der Erfindung liegt die Aufgabe zugrunde, einen Solarreflektor des in einem Solarkraftwerk verwendeten, bekannten Typs hinsichtlich einer Reduzierung der Anzahl möglicher Fehlerquellen und vor allem hinsichtlich des eigenen elektrischen Leistungsbedarfes zu verbessern.

Die gestellte Aufgabe wird mit den Merkmalen des Patentanspruchs 1 gelöst.

Das jeweilige Paar der 3/2-Wege-Sitzventile erfordert zusammen mit den Richtungsventilen für vier Hydrozylinder nur insgesamt vier Betätiger im Vergleich zu den sechs bei der bekannten Solarreflektor benötigten Betätigern, so dass sich sowohl die Anzahl der möglichen Fehlerquellen als auch der elektrische Eigenleistungsbedarf erheblich reduzieren. Es braucht für einen Nachführschritt nur ein Freischaltventil und ein Richtungsventil betätigt zu werden, wobei das Freischaltventil aufgrund der leckagefreien Blockierung der Anschlüsse der Arbeitsleitungen an der Seite der Lasthalteventile ohne weitere Maßnahmen verhindert, dass Systemdruck über das betätigte Freischaltventil zum Tank abgebaut wird.

Bei einer zweckmäßigen Ausführungsform sind die 3/2-Wege-Sitzventile des einen Paares in der anderen Schaltrichtung federbelastet, so dass sie, falls der gemeinsame Betätiger nicht aktiviert ist, in der anderen Schaltrichtung selbsttätig in die andere Schaltstellung schalten, ohne elektrische Leistung zu konsumieren.

Bei einer weiteren günstigen Ausführungsform ist der gemeinsame Betätiger ein elektrisch gesteuerter Magnet oder ein kurvengesteuerter mechanischer Betätiger. Der jeweils freizuschaltende Hydrozylinder kann für jeden Nachführschritt freigeschaltet werden, oder zumindest in seinem Umkehrbereich. Günstig handelt es sich somit bei dem gemeinsamen Betätiger entweder um einen elektrisch gesteuerten elektromagnetischen oder einen mechanischen und kurvengesteuerten Betätiger, wobei im letztgenannten Fall über die Kurvensteuerung die Relativstellungen des Hydrozylinders oder des Parabolspiegels abgegriffen werden, entsprechend der Offenbarung in der älteren EP 10 197 159.6, hier jedoch zumindest zur Freischaltung des jeweiligen Hydrozylinders.

Bei einer alternativen Ausführungsform, die weiterhin elektrische Eigenleistung einsparen lässt, sind die 3/2-Wege-Sitzventile des einen Paares so ausgebildet, dass sie die jeweils eingestellte Schaltstellung selbst halten, vorzugsweise mit einer Schaltstellungs-Verrastvorrichtung. Damit jedes 3/2-Wege-Sitzventil dennoch zwischen den zwei Schaltstellungen umstellbar ist, teilen sich die 3/2-Wege-Sitzventile des einen Paares für beide Schaltrichtungen jeweils einen gemeinsamen Betätiger, vorzugsweise einen elektrisch gesteuerten, elektromagnetischen Betätiger. Dank der Selbsthaltung reicht dann für eine Betätigung in der jeweiligen Schaltrichtung ein kurzer Impuls des Betätigers aus, und braucht der gegebenenfalls elektromagnetische Betätiger nicht über die gesamte Dauer beispielsweise eines Nachführschrittes bestromt zu werden.

Für die Verschaltung der Hydrozylinder in der hydraulischen Verstellvorrichtung sind unter anderem zwei Prinzipien zweckmäßig. Jeder Hydrozylinder kann separiert vom anderen mit seinen beiden Arbeitsleitungen mit der Druckquelle bzw. dem Tank über ein Richtungsventil verbunden werden, das zwischen den Lasthalteventilen und der Druckquelle bzw. dem Tank angeordnet ist. Dabei kann es sich bei dem Richtungsventil entweder um ein federbelastetes 4/2-Wegeventil, gegebenenfalls ein 4/2-Wege-Sitzventil, mit einem elektromagnetischen oder einem mechanischen Betätiger handeln, oder um ein eine Schaltstellungs-Verrastung aufweisendes 4/2-Wegeventil bzw 4/2-Wege-Sitzventil mit dann zwei zweckmäßig elektromagnetischen Betätigern. Alternativ können die Arbeitsleitungen beider Hydrozylinder miteinander und dann gemeinsam mit der Druckquelle bzw. dem Tank verbunden sein. Das Richtungsventil wird jeweils zwischen den Lasthalteventilen eines Hydrozylinders und der Verbindung der Arbeitsleitungen mit der Druckquelle bzw. dem Tank angeordnet. Das Richtungsventil ist entweder als federbelastetes 4/2-Wegeventil oder 4/2-Wege-Sitzventil mit einem elektrischen oder mechanischen Betätiger ausgebildet, oder als 4/2-Wegeventil oder 4/2-Wege-Sitzventil mit einer Schaltstellungs-Verrastvorrichtung und demzufolge zwei Betätigern jeweils für eine Schaltrichtung, vorzugsweise zwei elektromagnetischen Betätigern. Diese Verknüpfung der Arbeitsleitungen bedeutet eine schaltungstechnische Vereinfachung und hat dennoch keine Auswirkung auf die Funktionalität, da das Freischaltventil jeweils dann, wenn der zugehörige Hydrozylinder freigeschaltet ist, selbsttätig die jeweils druckführende Arbeitsleitung, über die der andere Hydrozylinder verstellt wird, leckagefrei blockiert.

Um von einer Notstromversorgung zum Ausführen des zumeist geforderten Notfallschrittes bei Stromausfall oder erforderlicher Stromabschaltung unabhängig zu sein, und den Notfallschritt beispielsweise mit dem Systemdruck oder aus einem Druckspeicher ausführen zu können, wird zweckmäßig zwischen den Arbeitsleitungen und der Druckquelle bzw. dem Tank ein federbelastetes Notfallschritt-4/2-Wegeventil mit einem elektromagnetischen Betätiger vorgesehen. Bei Nachführschritten ist der elektromagnetische Betätiger stets bestromt, so dass er eine bestimmte Verstellrichtung diktiert, aus der das Richtungsventil des arbeitenden Hydrozylinders die jeweilige Bewegungsrichtung (Einfahren oder Ausfahren) steuert. Bei einem Stromausfall stellt sich das federbelastete Notfallschritt-4/2-Wegeventil in seine andere Schaltstellung, so dass die gerade vom entsprechenden Richtungsventil gewählte Bewegungsrichtung des aktiven Hydrozylinders umgekehrt und der Parabolspiegel über einige Grad Drehwinkel Richtung Osten aus der Sonne verstellt wird. Hierbei kann es zwecks sicherer Funktion zweckmäßig sein, das Freischaltventil und das Richtungsventil selbsthaltend auszubilden.

Bei einer besonders zweckmäßigen Ausführungsform mit eigenständiger erfinderischer Bedeutung umfasst das jeweilige Freischaltventil eines Hydrozylinders ein weiteres Paar an 3/2-Wege-Sitzventilen, die sich für eine gleiche Schaltrichtung einen gemeinsamen elektromagnetischen oder mechanischen Betätiger teilen und mit den 3/2-Wege-Sitzventilen des einen Paares zu einer 5/3-Wege-Ventilfunktion gleich als das Richtungsventil kombiniert und verschaltet sind. Aus dieser Kombination der beiden Paare resultiert eine erhebliche bauliche Vereinfachung, da das jeweilige Richtungsventil mit dem Freischaltventil kombiniert und z.B. direkt am Hydrozylinder montiert werden kann, so dass zwischen den sogenannten Zylinderventilen und den Arbeitsräumen des Hydrozylinders extrem kurze und sichere Strömungswege vorliegen.

Im letzten Fall ist es zweckmäßig, wenn jedes 3/2-Wege-Sitzventil des weiteren Paares in einer an das jeweilige 3/2-Wege-Sitzventil des einen Paares angeschlossenen Tankleitung angeordnet und an eine Arbeitsleitung des Hydrozylinders angeschlossen ist und in der Tankleitungs-Durchgangsstellung den zum jeweiligen Lasthalteventil weisenden Arbeitsleitungsanschluss leckagefrei blockiert, so dass in freigeschaltetem Zustand des Hydrozylinders weder Systemdruck über das Freischaltventil zum Tank abgebaut noch bei direkt verbundenen Arbeitsleitungen beider Hydrozylinder der dann arbeitende Hydrozylinder keinen Druck über das Freischaltventil und Richtungsventil des freigeschalteten Hydrozylinders verliert.

Bei einer weiteren Ausführungsform, die noch mehr elektrische Eigenleistung ansparen lässt, weisen auch die 3/2-Wege-Sitzventile des weiteren Paares jeweils eine Schaltstellungs-Verrastung auf. Die beiden 3/2-Wege-Sitzventile des weiteren Paares teilen sich dann für jede Schaltrichtung einen gemeinsamen elektromagnetischen oder mechanischen Betätiger. Im Falle eines elektromagnetischen Betätigers braucht dieser zum Umschalten in der jeweiligen Schaltrichtung nur einen kurzen Impuls aufzubringen, weil die dann eingestellte Schaltstellung durch die Selbsthaltungsfunktion gehalten bleibt, bis der andere elektromagnetische Betätiger die nächste Schaltung in der anderen Schaltrichtung vornimmt.

Bei einer zweckmäßigen Ausführungsform, etwa analog zur EP 10 197 159.6, kooperiert der jeweilige mechanische Betätiger funktionell mit einer Kurvensteuerung, die entweder Hubwege und/oder Relativbewegungen des Hydrozylinders gegenüber einer stationären Abstützung oder einer Drehnabe des Parabolspiegels und/oder Relativbewegungen der Drehnabe in der Abstützung oder relativ zum Hydrozylinder innerhalb des Verstellbereiches des Parabolspiegels abgreift und auf den Betätiger überträgt. Dabei kann die Kurvensteuerung, zweckmäßig, beispielsweise dann eingreifen, wenn der zugeordnete Hydrozylinder gerade seinen Umkehrbereich erreicht oder allgemeinen einen ungünstigeren Hebelarm in Bezug auf die Drehachse des Parabolspiegels hat, als der andere Hydrozylinder.

Grundsätzlich kann es zweckmäßig sein, für zumindest einen Nachführschritt oder in jedem Fall für einen Notfallschritt ohne Zuhilfenahme der Druckquelle einen Druckspeicher mit einer Speicherladeschaltung vorzusehen, um ohne Betrieb einer Pumpe als Druckquelle genügend hydraulische Leistung zur Verfügung zu stellen. Auf diese Weise werden weniger Einschaltzyklen für die Pumpe benötigt.

Anhand der Zeichnungen werden Ausführungsformen des Erfindungsgegenstandes erläutert. Es zeigen:
- Fig. 1: eine schematische Seitenansicht einer Solarrinne,
- Fig. 2: Hauptkomponenten der Solarrinne von Fig. 1 in einer Arbeitsstellung,
- Fig. 3: ein Blockschaltbild einer hydraulischen Verstellvorrichtung einer Solarrinne (Stand der Technik), wie im Solarkraftwerk in Spanien, seit Jahren im Betrieb,
- Fig. 4: ein Blockschaltbild einer ersten Ausführungsform einer hydraulischen Verstellvorrichtung des Solarreflektors gemäß der Erfindung,
- Fig. 5: nebeneinander zwei weitere Detailvarianten,
- Fig. 6: ein Blockschaltbild einer weiteren Ausführungsform,
- Fig. 7: ein Blockschaltbild einer weiteren Ausführungsform, und
- Fig. 8: ein Blockschaltbild, das zwei unterschiedliche Detailvarianten einer hydraulischen Verstellvorrichtung des Solarreflektors repräsentiert.

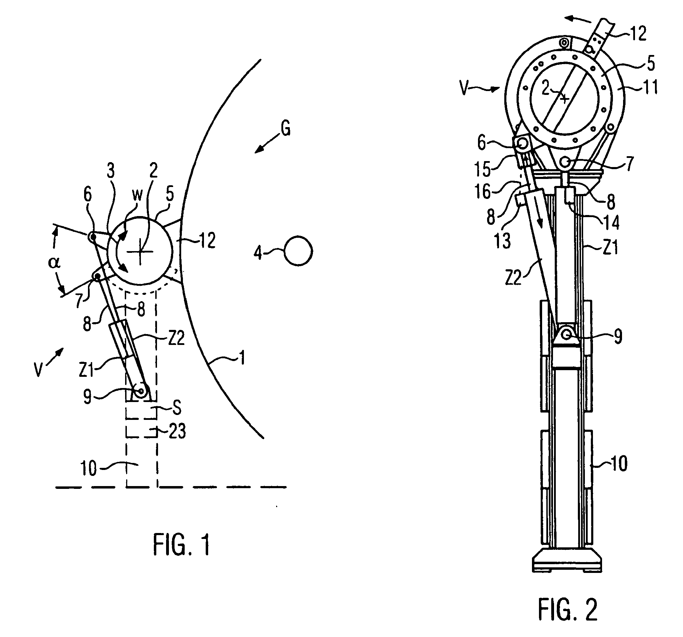

In Fig. 1 ist eine Solarrinne G mit einem gegebenenfalls mehrere Meter breiten und mehrere hundert Meter langen Parabolspiegel 1, in dessen Brennpunktbereich ein ein Wärmeträgermedium enthaltenden Absorberrohr 4 platziert ist, mittels eines Arms 12 an einer Drehnabe 5 fixiert, die mittels einer hydraulischen Verstellvorrichtung V um eine Drehachse 2 verstellbar ist, und zwar über einen durch einen Doppelpfeil 3 angedeuteten Verstellbereich von gegebenenfalls mehr als 180°. Die Drehachse 2 ist beispielsweise mit einer Nord/Süd-Orientierung angeordnet. Der Zweck der hydraulischen Verstellvorrichtung V ist es unter anderem, den Parabolspiegel 1 ausgehend von einer Morgenposition (nach Osten O weisend) während eines Sonnentages in einzelnen Nachführschritten über jeweils einige Winkelgrade mit dazwischenliegenden Pausen bis zu einer Abendstellung (wie gezeigt, nach Westen W), dem Sonnenstand nachzuführen. Im Falle eines Unwetters oder in der Nacht dient die hydraulische Verstellvorrichtung V dazu, den Parabolspiegel 1 in eine sichere Stauposition zu bringen und dort zu halten. Ferner wird nach einem Sonnentag oder vor einem Sonnentag oder während der Nacht der Parabolspiegel 1, gegebenenfalls über die Stauposition, aus der Abendposition in die Morgenposition überführt. Schließlich sind gegebenenfalls eine Montageposition und eine Wartungsposition einstellbar.

Obwohl die Erfindung im Einzelnen ausführlich in Bezug auf eine Solarrinne beschrieben ist, betrifft sie gleichermaßen auch andere Typen von Solarreflektoren, insbesondere Reflektoren für Heliostaten, bei denen das Sonnenlicht über verstellbare Spiegel auf einen Punkt, insbesondere in einem Turm, konzentriert wird.

Über die Länge des Parabolspiegels 1 ist dieser über mehrere stationäre Pylonen 10 auf dem Untergrund abgestützt, wobei zumindest ein Pylon 10 eine hydraulische Verstellvorrichtung V aufweist, beispielsweise mit einer in den Pylonen 10 integrierten Steuerung S und einem hydraulischen Motor-Pumpenaggregat 23 zur Versorgung mindestens zweier doppelt wirkender Hydrozylinder Z1, Z2, die beispielsweise mit ihren Zylinderenden gemeinsam in einer Drehabstützung 9 im Pylonen 10 verankert sind, und mit ihren Kolbenstangen 8 an zueinander in Umfangsrichtung versetzten Stellen (Versetzung α) an der Drehnabe 5 angelenkt sind. Die hydraulische Verstellvorrichtung V ist an eine Stromversorgung angeschlossen. Die zwei Hydrozylinder Z1, Z2 sind erforderlich, um den großen Verstellbereich (Doppelpfeil 3) abdecken zu können. Jedoch gibt es innerhalb des Verstellbereiches kinematische Situationen, in denen einer der Hydrozylinder einen ungünstigen Hebelarm in Bezug auf die Drehachse 2 hat, wie dies beispielsweise anhand Fig. 2 verdeutlicht ist.

In Fig. 2 wird beispielsweise der Arm 12 entgegen dem Uhrzeigersinn verstellt, wobei der Hydrozylinder Z2 einfährt, während der Hydrozylinder Z1 im Wesentlichen auf die Drehachse 2 ausgerichtet ist und deshalb keinen Wirkhebelarm in Bezug auf die Drehachse 2 hat. Um die Belastung der Drehnabe 5 in einer Drehlagerung 11 am Pylonen 10, resultierend aus der Beaufschlagungskraft des Hydrozylinders Z1, zu minimieren, wird zumindest in diesem Umkehrbereich des Hydrozylinders Z1 (von Einfahren auf Ausfahren) der Hydrozylinder Z1 freigeschaltet, d.h. im Wesentlichen drucklos gemacht. In Fig. 2 ist am jeweiligen Hydrozylinder Z1, Z2 ein sogenanntes Zylinderventil 13 bzw. 14 angedeutet, das zur Schaffung möglichst kurzer Strömungswege direkt am Hydrozylinder montiert sein kann und zur Bewegungssteuerung des jeweiligen Hydrozylinders dient. Die Freischaltung eines Hydrozylinders Z1, der gerade einen ungünstigen Wirkhebelarm in Bezug auf die Drehachse 2 hat, kann während jedes Nachführschrittes oder auch bei anderen Verstellvorgängen eingesteuert werden, oder nur beim und/oder im jeweiligen Umkehr- oder Totpunktbereich.

Als eine Alternative ist in Fig. 2 eine allgemein mit 15 bezeichnete Kurvensteuerung beispielsweise im Bereich des Anlenkpunktes 6 angedeutet, mit der über eine Betätigungsverbindung 16 das Zylinderventil 13 mechanisch schaltbar ist. Andernfalls kann in Fig. 2 das jeweilige Zylinderventil 13, 14 mit elektromagnetischen Betätigern, z.B. Schwarz/Weiß-Schaltmagneten, geschaltet werden, und zwar über die Steuerung S. Im Übrigen ist bei der Verwendung eines mechanischen Betätigers, wie in Fig. 2 angedeutet, die Kurvensteuerung 15 mit der Betätigungsverbindung 16 als Teil der Steuerung S der hydraulischen Verstellvorrichtung anzusehen, wie anhand der weiteren Figuren erläutert werden wird.

Fig. 3 ist ein Blockschaltbild der bekannten hydraulischen Verstellvorrichtung V jeder in einem Solarkraftwerk installierten Solarrinne, die mit Freischaltung jeweils eines Hydrozylinders Z1 oder Z2 betreibbar ist (Stand der Technik). In dem Motor-Pumpenaggregat 23 ist eine von einem Elektromotor getriebene Pumpe (Abschaltbetrieb oder Umlaufschaltung) enthalten, die eine Druckleitung 45 speist. Eine Tankleitung 46 ist an einen Tank R angeschlossen. An die Druckleitung und die Tankleitung 45, 46 sind parallel vier 3/2-Wege-Sitzventile 25, 26, 27, 28 als Richtungsventile der beiden Hydrozylinder Z1, Z2 angeschlossen, deren jedes einen eigenen, hier elektromagnetischen Betätiger 30, 31, 32, 33, z.B. einen Schwarz/Weiß-Magneten, aufweist, um das jeweilige 3/2-Wege-Sitzventil in einer Schaltrichtung gegen die Kraft einer Feder 40 zu betätigen. In der gezeigten Schaltstellung sind die elektromagnetischen Betätiger 30, 31, 32, 33 nicht bestromt, so dass die Federn 40 die gezeigten Schaltstellungen halten, in der jede zu einer Arbeitskammer (kolbenseitige Kammer und kolbenstangenseitige Kammer) der Hydrozylinder Z1, Z2 führende Arbeitsleitung 17, 18, 20, 21 mit der Tankleitung 46 verbunden ist, während die Anschlüsse der Druckleitung 45 leckagefrei blockiert sind. In der jeweils anderen Schaltstellung (Magnet bestromt, nicht gezeigt) wird die jeweilige Arbeitsleitung 17, 18, 20, 21 mit der Druckleitung 45 verbunden, und ist dann der zugehörige Anschluss der Tankleitung 46 leckagefrei blockiert. Jeweils zwei der 3/2-Wege-Sitzventile 25, 26, 27, 28 bilden ein Richtungsventil für einen Hydrozylinder Z1, Z2 und werden wechselseitig geschaltet, abhängig davon, ob der Hydrozylinder Z1, Z2 ausfahren oder einfahren soll.

In den Arbeitsleitungen 17, 18, 20, 21 sind Lasthalteventile 22 enthalten, die bei Nichtbetätigung der Richtungsventile den jeweiligen Hydrozylinder Z1, Z2 hydraulisch blockieren, hingegen bei seiner Betätigung - wie an sich bekannt - überkreuz aufgesteuert werden. Jedes Lasthalteventil 22 wird von einem in Abströmrichtung aus dem Hydrozylinder Z1, Z2 sperrenden Rückschlagventil umgangen. Wird beispielsweise die Arbeitsleitung 17 des Hydrozylinders Z1 mit Druck aus der Druckleitung 45 beaufschlagt, dann steuert dieser Druck das Lasthalteventil 22 der anderen Arbeitsleitung 18 auf, so dass Druckmittel aus der kolbenseitigen Kammer zum Tank R ausgeschoben wird, während der Hydrozylinder Z1 einfährt, und umgekehrt. Zwischen den Lasthalteventilen 22 und dem Hydrozylinder Z1, Z2 ist ferner ein Freischaltventil 36 mit einem hier elektromagnetischen Betätiger 37 (einem Proportionalmagneten) vorgesehen, das über Verbindungsäste 34 mit beiden Arbeitsleitungen 17, 18 verbunden und an eine Tankleitung 19 angeschlossen ist. Der elektromagnetische Betätiger 37 arbeitet gegen eine Feder, die bei nicht bestromtem Betätiger die gezeigte Schaltstellung herstellt, in der die Arbeitsleitungen 17, 18 von der Tankleitung 19 getrennt sind. In den Verbindungsästen 34 sind gegensinnig wirkende Rückschlagventile 35 enthalten. Insgesamt liegen für die zwei Hydrozylinder Z1, Z2 sechs elektromagnetische Betätiger 30, 31, 32, 33 und 37 vor. Ferner ist ein Druckspeicher 24 mit einer Speicherladeschaltung im Bereich des Motor-Pumpenaggregats 23 installiert.

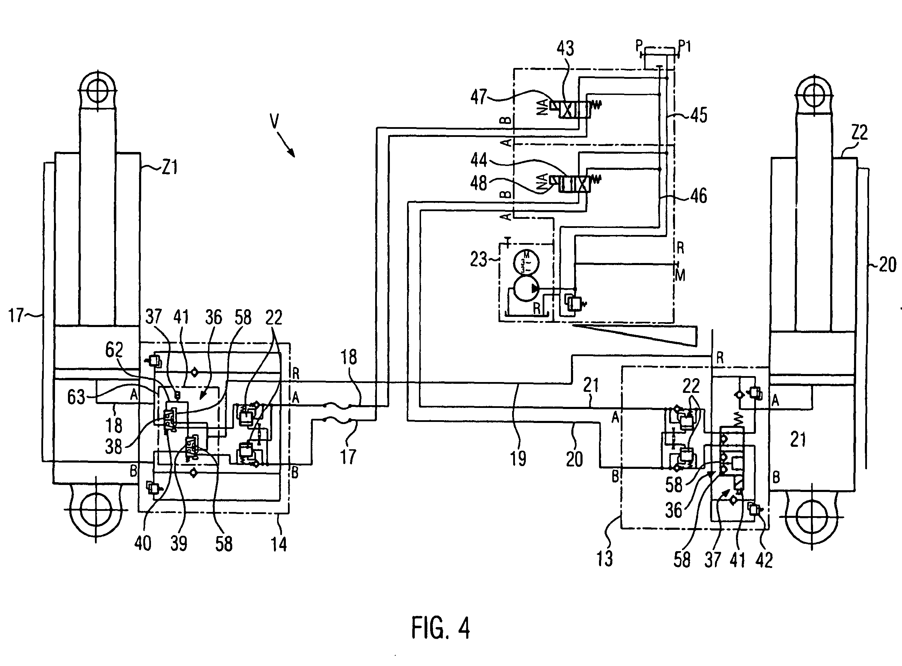

Fig. 4 zeigt ein Blockschaltbild einer ersten Ausführungsform einer erfindungsgemäßen hydraulischen Verstellvorrichtung V in stromlosem Zustand. Gleiche Ausstattungskomponenten wie in Fig. 3 sind mit denselben Bezugszeichen markiert. Die Arbeitsleitungen 17, 18 des Hydrozylinders Z1 sind separat von den Arbeitsleitungen 20, 21 des Hydrozylinders Z2 zum jeweiligen Richtungsventil 43, 44 geführt. Die beiden Richtungsventile 43, 44 sind parallel an die Druckleitung 45 und die Tankleitung 46 angeschlossen. Hierbei handelt es sich um 4/2-Wegeventile (in Schieberbauweise oder als Wege-Sitzventile) jeweils mit einem elektromagnetischen Betätiger 47, 48. Die beiden Hydrozylinder Z1, Z2 gemeinsame Tankleitung 19 führt zur Tankleitung 46.

Das zwischen den Lasthalteventilen 22 und dem jeweiligen Hydrozylinder Z1, Z2 angeordnete Freischaltventil 36 ist eine Kombination aus zwei 3/2-Wege-Sitzventilen 38, 39, die baugleich sein können, und die zweckmäßig als ein Paar in einem gemeinsamen Gehäuse 63 untergebracht sind, derart, dass jeweils ein 3/2-Wege-Sitzventil 38, 39 in einer Arbeitsleitung 17, 18 bzw. 20, 21 angeordnet ist.

Die beiden Freischaltventile 36 in Fig. 4 können baugleich sein. Jedoch ist in der rechten Hälfte der Figur zur Darstellung vereinfachte Symbolik gewählt, hingegen in der linken Hälfte der Figur aufgelöste Symbolik. Die Kombination resultiert in einer 5/2-Wege-Ventilfunktion, d.h., es liegen fünf Strömungswege vor, und können zwei Schaltstellungen in zueinander entgegengesetzten Schaltrichtungen eingestellt werden.

In der Kombination in Fig. 4 teilt sich das Paar der 3/2-Wege-Sitzventile 38, 39 für eine Schaltrichtung einen gemeinsamen Betätiger 37, hier einen Elektromagneten 41, der über eine Kraftübertragungsverbindung 62 beide 3/2-Wege-Sitzventile 38, 39 gemeinsam gegen die Kraft einer Feder 40 betätigt. In Fig. 4 ist der Magnet 41 stromlos, so dass die Feder 40 eine Schaltstellung hält, in der jedes 3/2-Wege-Sitzventil 38, 39 in einer Arbeitsleitungs-Durchgangsstellung ist, und Verbindungen zu der Tankleitung 19 blockiert sind. Wird der Magnet 41 bestromt, um beispielsweise den Hydrozylinder Z1 freizuschalten, werden beide Arbeitskammern des Hydrozylinders Z1 mit der Tankleitung 19 verbunden, hingegen Anschlüsse 58 der Arbeitsleitungen 17, 18 (bzw. 20, 21) an der Seite der Lasthalteventile 22 leckagefrei blockiert, so dass zumindest Systemdruck nicht über die Tankleitung 19 abgebaut werden kann. Als optionale Ausstattung ist ferner in Fig. 4 jeder Arbeitsleitung 17, 18, 20, 21 ein Schockventil 42 zur Tankleitung 19 zugeordnet, das bei einem Druckstoß öffnet und die Lasthalteventile 22 umgeht. Die Bewegungsrichtung des jeweils nicht freigeschalteten Hydrozylinders Z2 oder Z1 wird über Richtungsventile 43 oder 44 eingestellt (4/2-Wegeventile z.B. in Schieber- oder Sitzbauweise, mit einem elektromagnetischen Betätiger 49, 48, gegen Federkraft).

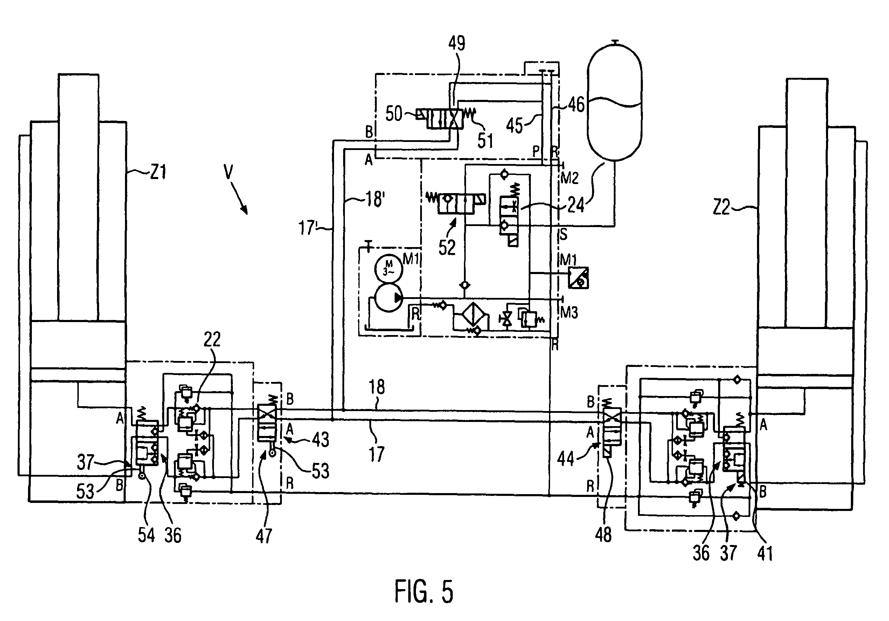

Die in Fig. 5 gezeigte Ausführungsform der hydraulischen Verstellvorrichtung V unterscheidet sich von der der Fig. 4 hauptsächlich dadurch, dass die Arbeitsleitungen 17, 18 beiden Hydrozylindern Z1, Z2 miteinander und über Verbindungsleitungen 17', 18' mit einem Notfallschritt-4/2-Wegeventil 49 mit einem Magneten 50 verbunden sind, das an die Druckleitung 45 und die Tankleitung 46 angeschlossen ist, und bei nicht bestromtem Magneten 50 die gezeigte Schaltstellung mittels der Feder 51 einnimmt. Bei jedem Nachführschritt des Parabolspiegels 1 von Osten nach Westen wird der Magnet 50 bestromt. Die jeweilige Bewegungsrichtung des dann nicht freigeschalteten Hydrozylinders Z1, Z2 wird vom Richtungsventil 43 oder 44 in den Arbeitsleitungen 17, 18 eingestellt. Kommt es zu einem Stromausfall, stellt die Feder 51 am Notfallschritt-4/2-Wegeventil 49 die gezeigte Schaltstellung her, in welcher der Parabolspiegel über einen Notfallschritt, beispielsweise aus dem mit der Speicherladeschaltung 24 in die hydraulische Verstellvorrichtung V integrierten Druckspeicher 24 einige Winkelgrade wieder Richtung Osten aus der Sonne verdreht wird.

Jeder Nachführschritt kann z.B. in Fig. 5 durch Abschalten der Druckquelle (Pumpe) beendet werden, oder mit einem 2/2-Wege-Sitzventil 52. Die Richtungsventile 43, 44 können selbsthaltend ausgebildet sei, so dass sie bei einem Stromausfall ihre Schaltstellung selbsttätig halten.

In Fig. 5 sind beide Freischaltventile 36 in der vereinfachten Symbolik entsprechend Fig. 4, rechts, dargestellt, wobei die das Freischaltventil 36 bildenden 3/2-Wege-Sitzventilen 38, 39 (Fig. 4) des einen Paares sich für eine Schaltrichtung einen gemeinsamen Betätiger 37, hier einen Magneten 41, teilen und in der anderen Schaltrichtung durch Federkraft umgestellt werden. Im Unterschied zu Fig. 4 ist in Fig. 5 das jeweilige Richtungsventil 43, 44 (ein 4/2-Wegeventil in Schieberbauweise oder Sitzventilbauweise) direkt beim Hydrozylinder Z1, Z2 zwischen den Verbindungsleitungen 17', 18' und den Lasthalteventilen 22 in den gemeinsamen Arbeitsleitungen 17, 18 platziert.

In der rechten Hälfte in Fig. 5 haben das Freischaltventil 36 und/oder das Richtungsventil 44 je einen elektromagnetischen Betätiger 48 bzw. 41. In der linken Hälfte in Fig. 5 haben hingegen das Freischaltventil 36 und/oder das Richtungsventil 43 jeweils einen mechanischen Betätiger 53, beispielsweise einen Stößel oder Hebel, der das Ventil über eine Kurvensteuerung 54 (in Fig. 2 die Komponenten 15, 16) betätigt. Ein gemeinsamer mechanischer Betätiger 53 schaltet gemeinsam die beiden 3/2-Wege-Sitzventile 38, 39 des einen Paares in der einen Schaltrichtung gegen Federkraft. Als weitere, nicht gezeigte Alternative könnte auch nur das jeweilige Richtungsventil 43 oder 44 oder nur das jeweilige Freischaltventil 36 einen mechanischen Betätiger 53 aufweisen. Obwohl Fig. 5 in der hydraulischen Verstellvorrichtung V beide Detailvarianten nebeneinander zeigt, wird in der Praxis jeweils nur eine Detailvariante eingesetzt.

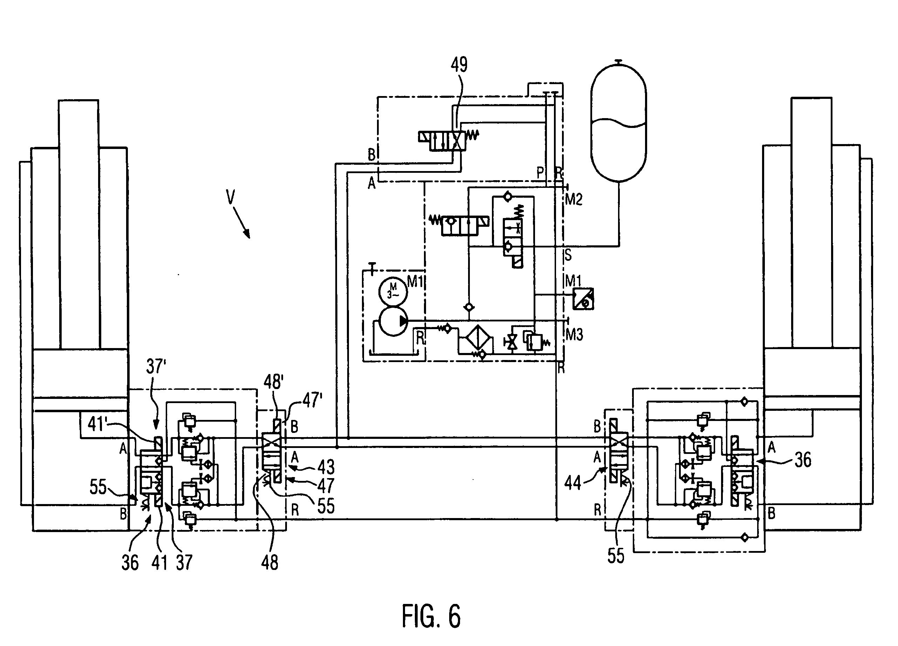

Fig. 6 zeigt ein Blockschaltbild einer Detailvariante der hydraulischen Verstellvorrichtung V mit ähnlicher Funktion wie anhand Fig. 5, rechte Seite, erläutert, wobei jedoch die beiden Freischaltventile 36 und/oder die Richtungsventile 43, 44 selbsthaltende Ventile sind, d.h., eine Schaltstellungs-Verrastvorrichtung 55 aufweisen, die jede eingestellte Schaltstellung mechanisch (oder magnetisch) hält, selbst wenn der Betätiger nicht mehr aktiv ist. Alternativ könnten auch nur die Freischaltventile 36 oder nur die Richtungsventile 43, 44 selbsthaltend ausgebildet sein. Da aufgrund der Selbsthaltung das jeweilige Ventil nicht ohne Weiteres nur unter Federkraft selbsttätig umzuschalten vermag, sind jeweils zwei steuerbare Betätiger an jedem Ventil vorgesehen, die zum Umschalten in einer jeweiligen Schaltrichtung allerdings nur einen Impuls aufzubringen brauchen, und nicht über die gesamte Zeitdauer aktiv sein müssen, über welche die Schaltstellung gehalten bleibt.

So teilen sich die beiden im Freischaltventil 36 kombinierten 3/2-Wege-Sitzventile 38, 39 (Fig. 4, linke Seite) hier für jede Schaltrichtung einen gemeinsamen Betätiger 37, 37', und zwar jeweils einen Magneten 41, 41'. Das Richtungsventil 43 bzw. 44 ist auch hier ein 4/2-Wegeventil (in Schieberbauweise oder Sitzventilbauweise) mit der Schaltstellungs-Verrastvorrichtung 55 und einem Betätiger 47, 47' für jeweils eine Schaltrichtung, d.h. in der gezeigten Ausführungsform einen Magneten 48 und einen weiteren Magneten 48'.

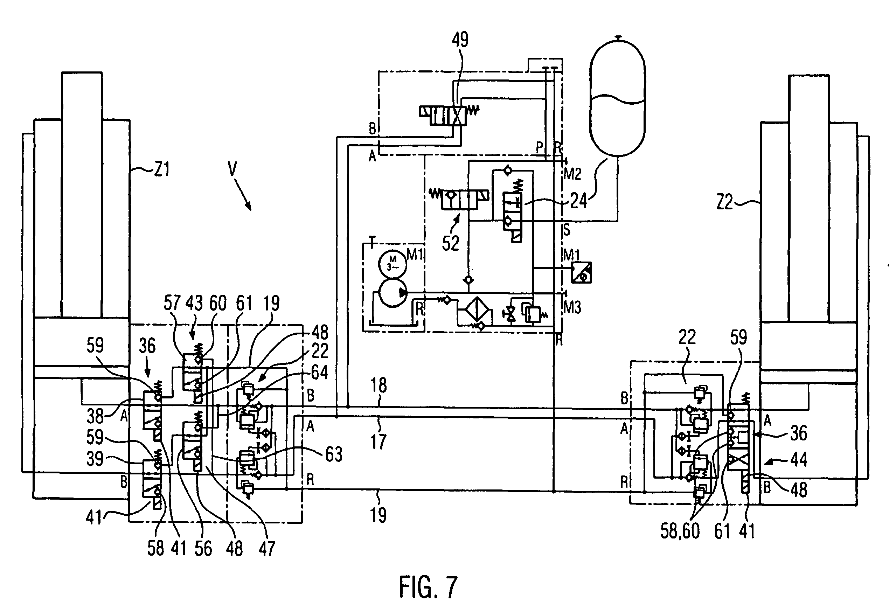

Die Ausführungsform der hydraulischen Verstellvorrichtung V gemäß dem Blockdiagramm in Fig. 7 ist funktionell ähnlich der der Fig. 6, ist jedoch baulich vereinfacht, wobei in der rechten Hälfte eine vereinfachte Symbolik gewählt ist, und in der linken Hälfte für dieselbe, hier 5/3-Wege-Ventilfunktion, die aufgelöste Symbolik ähnlich wie in Fig. 4.

Speziell ist in Fig. 7 das Paar der 3/2-Wege-Sitzventile 38, 39 der das Freischaltventil 36 (z.B. in Fig. 7 links) bildenden Kombination zwischen den Lasthalteventilen 22 und dem jeweiligen Hydrozylinder Z1, Z2 baulich kombiniert mit einem weiteren Paar 3/2-Wege-Sitzventilen 56 und 57, insgesamt verschaltet für eine 5/3-Wege-Ventilfunktion. Die 3/2-Wege-Sitzventile 56, 57 des weiteren Paares bilden hier das jeweilige Richtungsventil 43 (bzw. 44), teilen sich einen gemeinsamen, hier elektromagnetischen Betätiger 47, nämlich den Magneten 48, und sind jeweils in einer Tankverbindungsleitung von einem der 3/2-Wege-Sitzventile 38, 39 des einen Paares zur gemeinsamen Tankleitung 19 angeordnet. Über Stichleitungen 64, 63 ist jedes 3/2-WegeSitzventil 56, 57 des weiteren Paares an nur eine Arbeitsleitung 17, 18 angeschlossen. Ferner sind die 3/2-Wege-Sitzventile 56, 57 an z.B. der Seite der Lasthalteventile 22 über eine Verbindungsleitung 62 miteinander verbunden. Über einen Anschluss 58, 59 blockiert jedes 3/2-Wege-Sitzventil 38, 39 des einen Paares die Arbeitsleitung bzw. Tankleitung an der Seite der Lasthalteventile 22. Über einen Anschluss 60 und 61 blockiert jedes 3/2-Wege-Sitzventil 56, 57 in einer Schaltstellung leckagefrei die Stichleitung 63 bzw. 62 bzw. 64, so dass bei Druckbeaufschlagung einer Arbeitsleitung 17 oder 18 zum Betätigen des jeweils anderen Hydrozylinders Z1, Z2 bei freigeschaltetem einem Hydrozylinder Z1, Z2 Druck nicht über das Freischaltventil 36 zur Tankleitung 19 abgebaut wird.

In der rechten Hälfte in Fig. 7 ist mit vereinfachter Symbolik die 5/3-Wege-Ventilfunktion dargestellt, und zwar mit den Anschlüssen 59, 58, 60 und 61 zum leckagefreiem Blockieren in einer jeweiligen Schaltstellung. In der oberen Schaltstellung in der rechten Hälfte in Fig. 7 ist die Arbeitsleitung 18 mit der kolbenseitigen Kammer des Hydrozylinders Z2 verbunden, ist die Arbeitsleitung 17 mit der kolbenstangenseitigen Kammer verbunden, und ist der Anschluss 59 zur Tankleitung 19 blockiert. In der mittleren Schaltstellung sind die Anschlüsse 58, 60 an der Seite der Lasthalteventile 22 blockiert, sind die kolbenseitige und die kolbenstangenseitige Kammer miteinander verbunden und gemeinsam mit der Tankleitung 19 in Verbindung. In der unteren Schaltstellung ist wiederum der Anschluss zur Tankleitung 19 an der Seite der Lasthalteventile 22 blockiert. Jedoch ist die Arbeitsleitung 18 nun mit der kolbenstangenseitigen Kammer verbunden, während die Arbeitsleitung 17 mit der kolbenseitigen Kammer verbunden ist. Die beiden hier elektromagnetischen Betätiger (Magneten 41, 48) sind zwar hintereinander dargestellt, dienen gemäß linke Seite in Fig. 7 jedoch zur Betätigung nur jeweils eines Paares der 3/2-Wege-Sitzventile in einer Schaltrichtung, wie erläutert.

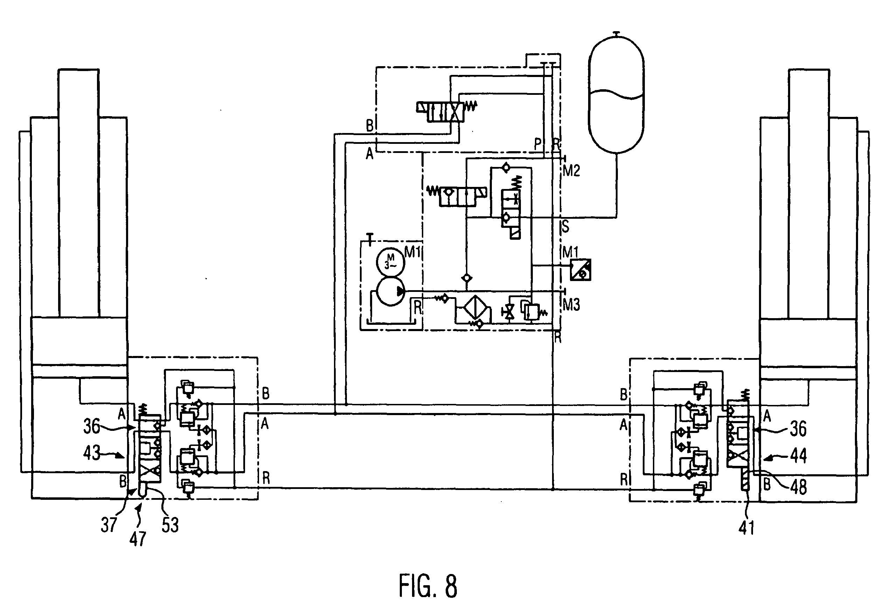

Die Ausführungsform der Fig. 8 ist funktionell der der Fig. 7 gleich. In der rechten Hälfte in Fig. 8 ist analog zu Fig. 7 die Kombination des Freischaltventils 36 mit dem Richtungsventil 44 aus beiden Paaren der 3/2-Wege-Sitzventile mit den zwei Betätigern 37 bzw. den Magneten 41, 48 angedeutet, während in der linken Hälfte von Fig. 8 als Detailvariante die Kombination des Freischaltventils 36 mit dem Richtungsventil 43 mit einem gezeigten mechanischen Betätiger 53 (eigentlich zwei mechanischen Betätigern 53) gezeigt wird, die die Betätiger 37 und 47 für das Freischaltventil 36 und das Richtungsventil 43 konstituieren, und zwar so, dass analog zu Fig. 7, linke Seite, ein mechanischer Betätiger 53 das eine Paar aus den 3/2-Wege-Sitzventilen 38, 39 gemeinsam in einer Schaltrichtung betätigt, während der andere mechanische Betätiger 53 das weitere Paar der das Richtungsventil 43 bildenden 3/2-Wege-Sitzventile 56, 57 in einer Schaltrichtung betätigt.

In einer weiteren, nicht dargestellten Alternative könnte die 5/3-Wege-Ventilfunktion in den Fig. 7 und 8 auch unter Verwendung von Schaltstellungs-Verrastvorrichtungen 55 wie in beispielsweise in Fig. 6 ausgebildet sein. Dann wird für jedes Paar der 3/2-Wege-Sitzventile wegen der Schaltstellungs-Verrastvorrichtung 55 jeweils ein Betätiger für jede Schaltrichtung benötigt, zweckmäßig, wie in Fig. 6, Magneten 41, 41' im Freischaltventil 36 und 48, 48' im Richtungsventil 43 (bzw. 44).

## Patentansprüche

1. Solarreflektor (G) mit hydraulischer Verstellvorrichtung (V), in welcher mindestens zwei doppelt wirkende Hydrozylinder (Z1, Z2) mit Umfangsversetzung (α) an einem drehbar gelagerten Spiegel (1) angelenkt sind, die über eine Steuerung (S) in Arbeitsleitungen (17, 18, 20, 21) mit über die Steuerung (S) betätigbaren Richtungsventilen (43, 44) wahlweise mit einer Druckquelle (P) und einem Tank (R) verbindbar sind, wobei in den Arbeitsleitungen Lasthalteventile (22) angeordnet sind, und mit einem über die Steuerung (S) in zwei entgegengesetzten Schaltrichtungen betätigbaren, mit beiden Arbeitsleitungen des Hydrozylinders und dem Tank (R) verbundenen Hydrozylinder-Freischaltventil (36) zwischen jedem Hydrozylinder und den Lasthalteventilen, **dadurch gekennzeichnet, dass** das Freischaltventil (36) ein Paar für eine 5/2-Wege-Ventilfunktion verschalteter 3/2-Wege-Sitzventile (38, 39) aufweist, von denen jeweils eines in einer Arbeitsleitung (17, 18; 20, 21) angeordnet und zwischen einer den Hydrozylinder mit einem Richtungsventil (43, 44) verbindenden Durchgangs-Schaltstellung und einer den Hydrozylinder von dem Richtungsventil (43, 44) leckagefrei separierenden, den Hydrozylinder mit dem Tank (R) verbindenden Freischalt-Schaltstellung betätigbar ist, und dass sich die 3/2-Wege-Sitzventile (38, 39) des Paares für eine Schaltrichtung einen gemeinsamen Betätiger (37) teilen.

2. Solarreflektor nach Anspruch 1, **dadurch gekennzeichnet, dass** die 3/2-Wege-Sitzventile (38, 39) des Paares in der anderen Schaltrichtung federbelastet sind.

3. Solarreflektor nach Anspruch 1, **gekennzeichnet durch** einen elektrisch gesteuerten, elektromagnetischen oder einen kurvengesteuerten mechanischen Betätiger (37, 41; 53).

4. Solarreflektor nach Anspruch 1, **dadurch gekennzeichnet, dass** die 3/2-Wege-Sitzventile (38, 39) des Paares die jeweilige Schaltstellung selbsthaltend ausgebildet, vorzugsweise mit einer Schaltstellungs-Verrastvorrichtung (55) versehen, sind, und dass sich die 3/2-Wege-Sitzventile (38, 39) des Paares für beide Schaltrichtungen jeweils einen gemeinsamen Betätiger (37, 37'), vorzugsweise einen elektrisch gesteuerten, elektromagnetischen Betätiger (41, 41') teilen.

5. Solarreflektor nach wenigstens einem der vorhergehenden Ansprüche, **dadurch gekennzeichnet, dass** jeder Hydrozylinder (Z1, Z2) separiert vom anderen mit seinen beiden Arbeitsleitungen (17, 18; 20, 21) entweder über das als federbelastetes 4/2-Wegeventil mit einem einzigen elektromagnetischen oder mechanischen Betätiger (48, 53) ausgebildete Richtungsventil (43, 44) oder über das als eine Schaltstellungs-Verrastvorrichtung (55) aufweisendes 4/2-Wegeventil mit zwei elektromagnetischen Betätigern (48, 48') ausgebildete Richtungsventil (43, 44) mit der Druckquelle (P) und dem Tank (R) verbindbar ist, wobei die 4/2-Wegeventile zwischen den Lasthalteventilen (22) und der Druckquelle (P) bzw. dem Tank (R) angeordnet sind.

6. Solarreflektor nach wenigstens einem der Ansprüche 1 bis 4, **dadurch gekennzeichnet, dass** die Arbeitsleitungen (17, 18) beider Hydrozylinder (Z1, Z2) miteinander und gemeinsam mit der Druckquelle (P) und dem Tank (R) verbunden sind, dass jeweils zwischen den Lasthalteventilen (22) und der Verbindung (17", 18') der Arbeitsleitungen (17, 18) mit der Druckquelle (P) und dem Tank (R) entweder das als federbelastetes 4/2-Wegeventil mit einem elektromagnetischen oder mechanischen Betätiger (48, 47; 53) ausgebildete Richtungsventil (43, 44) oder das als eine Schaltstellungs-Verrastvorrichtung (55) aufweisendes 4/2-Wegeventil mit zwei elektromagnetischen Betätigern (48, 48') ausgebildete Richtungsventil (43, 44) angeordnet ist.

7. Solarreflektor nach Anspruch 5 oder 6, **dadurch gekennzeichnet, dass** zwischen den Arbeitsleitungen (17, 18) und der Druckquelle (P) bzw. dem Tank (R) ein federbelastetes Notfallschritt-4/2-Wegeventil (59) mit einem elektromagnetischen Betätiger (50) vorgesehen ist.

8. Solarreflektor nach wenigstens einem der vorhergehenden Ansprüche, **dadurch gekennzeichnet, dass** das jeweilige Freischaltventil (36) eines Hydrozylinders (Z1, Z2) als Richtungsventil (43, 44) ein weiteres Paar 3/2-Wege-Sitzventile (56, 57) umfasst, die sich für eine Schaltrichtung einen gemeinsamen, elektromagnetischen oder mechanischen Betätiger (48, 53) teilen und mit den 3/2-Wege-Sitzventilen (38, 39) des einen Paares zu einer 5/3-Wege-Ventilfunktion kombiniert und mit diesen zwischen dem einen Paar 3/2-Wege-Sitzventile (38, 39) und den Lasthalteventilen (22) verschaltet sind.

9. Solarreflektor nach Anspruch 8, **dadurch gekennzeichnet, dass** jedes 3/2-Wege-Sitzventil (56, 57) des weiteren Paares in einer an das jeweilige 3/2-Wege-Sitzventil (38, 39) des einen Paares angeschlossenen Tankleitung (19) angeordnet und an eine Arbeitsleitung (17, 18) des Hydrozylinders angeschlossen ist und in der Tankleitungs-Durchgangsstellung den zum jeweiligen Lasthalteventil (22) weisenden Arbeitsleitungsanschluss (60) leckagefrei blockiert.

10. Solarreflektor nach Anspruch 8, **dadurch gekennzeichnet, dass** die 3/2-Wegesitzventile (56, 57) des weiteren Paares jeweils eine Schaltstellungs-Verrastvorrichtung (55) aufweisen und sich für jede Schaltrichtung einen gemeinsamen elektromagnetischen oder mechanischen Betätiger teilen.

11. Solarreflektor nach wenigstens einem der vorhergehenden Ansprüche, **dadurch gekennzeichnet, dass** der jeweilige mechanische Betätiger (53) funktionell mit einer Kurvensteuerung (54) kooperiert, die entweder Hubwege und/oder Relativbewegungen des jeweiligen Hydrozylinders (Z1, Z2) gegenüber einer stationären Abstützung (10) oder Relativbewegungen einer Drehnabe (5) des Spiegels (1) in der Abstützung (10) oder gegenüber dem jeweiligen Hydrozylinder (Z1, Z2) innerhalb des Verstellbereiches des Spiegels (1) abgreift und auf den Betätiger (53) überträgt.

12. Solarreflektor nach wenigstens einem der vorhergehenden Ansprüche, **dadurch gekennzeichnet, dass** der Druckquelle (P) zumindest ein Druckspeicher (24) mit einer Speicherladeschaltung zugeordnet ist.

## Claims

1. Solar reflector (G) with hydraulic adjustment device (V), comprising at least two double actuated hydrocylinders (Z1, Z2) linked with a circumferential offset (α) to a rotatably supported mirror (1), which hydrocylinders (Z1, Z2) can be connected via working lines (17, 18, 20, 21) by a control (S) selectively with a pressures source (P) and a tank (R) by directional control valves (43, 44) actuated by the control (S), wherein load holding valves (22) are provided in the working lines, and a hydrocylinder releasing switching valve (36) is arranged between each hydrocylinder and the load holding valves which is actuated the control (S) in two opposite switching directions and is connected with both working lines of the hydrocylinder and the tank (R), **characterized in that** the releasing switching valve (36) comprises a pair of 3/2-multiways-seat valves (38, 39) switched for a 5/2-multiways-valve function, among which a respective one is arranged in one working line (17, 18; 20, 21) to be actuated between a through flow switching position connecting the hydrocylinder with one directional control valve (43, 44) and a releasing switching position separating the hydrocylinder without leakage from the directional control valve (43, 44) and connecting the hydrocylinder with a tank (R), and that the 3/2-multiways-seat valves (38, 39) of the pair share a common actuator (37) for one switching direction.

2. Solar reflector according to claim 1, **characterized in that** the 3/2-multiways-seat valves (38,39) of the pair are spring loaded in the other switching direction.

3. Solar reflector according to claim 1, **characterized by** an actuator (37, 41; 53) which either is controlled electrically or is electromagnetic or is mechanically cam-controlled.

4. Solar reflector according to claim 1, **characterized in that** the 3/2-multiways-seat valves (38, 39) of the pair are designed such that they automatically maintain the respective switching position, preferably are equipped with a switching position locking device (55), and that the 3/2-multiways-seat valves (38,39) of the pair respectively share a common actuator (37, 37') for each of both switching directions, preferably an electrically controlled electromagnetic actuator (41, 41').

5. Solar reflector according to at least one of the preceding claims, **characterized in that** each hydrocylinder (Z1, Z2) can be connected with its both working lines (17, 18; 20, 21) with the pressure source (P) and the tank (R) separated from the respective other one either by the directional control valve (43, 44) being constructed as a spring loaded 4/2-multiways valve having a single electromagnetic or mechanical actuator (48, 53), or through the directional control valve (43, 44) being constructed as a 4/2-multiways valve having two electromagnetic actuators (48, 48') and the switching position locking device (55), wherein the respective 4/2-multiways valve is arranged between the load holding valves (22) and both the pressure source (P) and the tank (R).

6. Solar reflector according to at least one of claims 1 to 4, **characterized in that** the working lines (17, 18) of both hydrocylinders (Z1, Z2) are connected with each other and are commonly connected with the pressure source (P) and the tank (R), that respectively between the load holding valve (22) and a connection (17', 18') of the working lines (17, 18) to the pressure source (P) and the tank (R) either the directional control valve (43, 44) constructed as the spring loaded 4/2-multiways valve having an electromagnetic or a mechanical actuator (48, 47; 53) or the directional control valve (43, 44) constructed as the 4/2-multiways valve having two electromagnetic actuators (48, 48') and a switching position locking device (55) is arranged.

7. Solar reflector according to claim 5 or claim 6, **characterized in that** a spring loaded emergency-step-4/2-multiways valve (59) having an electromagnetic actuator (50) is provided between the working lines (17, 18) and both the pressure source (P) and the tank (R).

8. Solar reflector according to at least one of the preceding claims, **characterized in that** the respective releasing switching valve (36) of a hydrocylinder (Z1, Z2) comprises as the directional control valve (43, 44) a further pair of 3/2-multiways-seat valves (56, 57) sharing for one switching direction a common electromagnetic or mechanical actuator (48, 53) and which are combined with the 3/2-multiways-seat valves (38, 39) of the one pair to provide a 5/3-multiways-valve function, and which are switched with these seat valves between the one pair of 3/2-multiways-seat valves (38, 39) and the load holding valves (22).

9. Solar reflector according to claim 8, **characterized in that** each 3/2-multiways-seat valve (56, 57) of the further pair is arranged in a tank line (19) connected with a respective 3/2-multiways-seat valve (38, 39) of the one pair and also is connected with one working line (17, 18) of the hydrocylinder such that it blocks in its tank line-through flow position the respective working line port (60) without leakage, which working line port (60) faces to the respective load holding valve (22).

10. Solar reflector according to claim 8, **characterized in that** the 3/2-multiways-seat valves (56, 57) of the further pair respectively comprise a switching position locking device (55) and share for each of both switching directions a respective common electromagnetic or mechanical actuator.

11. Solar reflector according to at least one of the preceding claims, **characterized in that** the respective mechanical actuator (53) functionally co-acts with a cam control (54) which either detects within the adjustment range of the mirror (1) strokes and/or relative movements of the respective hydrocylinder (Z1, Z2) in relation to a stationary support (10) or relative movements of a rotating hub (5) of the mirror (1) in the support (10) relative to the respective hydrocylinder (Z1, Z2), and transmits the detected strokes travels and/or relative movements to the actuator (53).

12. Solar reflector according to at least one of the preceding claims, **characterized in that** at least one pressure accumulator (24) having an accumulator charging circuit is associated to the pressure source (P).

## Revendications

1. Réflecteur solaire (G) comportant un dispositif de réglage hydraulique (V) dans lequel au moins deux vérins hydrauliques à double effet (Z1, Z2) avec décalage de course (a) sont accouplés à un miroir à montage rotatif (1) et sont connectables sélectivement à une source de pression (P) et à un réservoir (R) via une commande (S) sur des lignes de service (17, 18, 20, 21) avec des vannes directionnelles (43, 44) actionnables via la commande (S), dans lequel des vannes de maintien de charge (22) sont agencées sur les lignes de service, et avec une vanne d'activation de vérin hydraulique (36) commandable via la commande (S) dans deux sens de commutation opposés, connectée aux deux lignes de service du vérin hydraulique et au réservoir (R), entre chaque vérin hydraulique et les vannes de maintien de charge, **caractérisé en ce que** la vanne d'activation (36) comporte une paire de vannes à siège 3/2 voies (38, 39) connectées entre elles pour assurer une fonction de vanne 5/2 voies, dont une vanne respective est agencée sur une ligne de service (17, 18 ; 20, 21) et est actionnable entre une position de commutation ouverte connectant le vérin hydraulique avec une vanne directionnelle (43, 44) et une position de commutation d'activation séparant sans fuites le vérin hydraulique de la vanne directionnelle (43, 44) et connectant le vérin hydraulique au réservoir (R), et **en ce que** les vannes à siège 3/2 voies (38, 39) de la paire distribuent vers un actionneur commun (37) pour un sens de commutation.

2. Réflecteur solaire selon la revendication 1, **caractérisé en ce que** les vannes à siège 3/2 voies (38, 39) de la paire sont précontraintes par ressort dans l'autre sens de commutation.

3. Réflecteur solaire selon la revendication 1, **caractérisé par** un actionneur (37, 41 ; 53) électromagnétique à commande électrique ou mécanique à commande par came.

4. Réflecteur solaire selon la revendication 1, **caractérisé en ce que** les vannes à siège 3/2 voies (38, 39) de la paire constituent un auto-maintien de la position de commutation respective, et sont préférablement pourvues d'un dispositif de verrouillage de la position de commutation (55), et **en ce que** les vannes à siège 3/2 voies (38, 39) de la paire distribuent vers un actionneur commun (37, 37') pour les deux sens de commutation respectifs, préférablement un actionneur électromagnétique à commande électrique (41, 41').

5. Réflecteur solaire selon au moins l'une des revendications précédentes, **caractérisé en ce que** chaque vérin hydraulique (Z1, Z2) est connectable à la source de pression (P) et au réservoir (R) séparément de l'autre avec ses deux lignes de service (17, 18 ; 20, 21) soit via la vanne directionnelle (43, 44) constituée comme une vanne 4/2 voies précontrainte par ressort avec un actionneur électromagnétique ou mécanique unique (48, 53), soit via la vanne directionnelle (43, 44) constituée comme une vanne 4/2 voies comportant un dispositif de verrouillage de position de commutation (55) avec deux actionneurs électromagnétiques (48, 48'), dans lequel les vannes 4/2 voies sont agencées entre les vannes de maintien de charge (22) et respectivement la source de pression (P) et le réservoir (R).

6. Réflecteur solaire selon au moins l'une des revendications 1 à 4, **caractérisé en ce que** les lignes de service (17, 18) des deux vérins hydrauliques (Z1, Z2) sont connectées entre elles et conjointement à la source de pression (P) et au réservoir (R), et **en ce que**, entre respectivement les vannes de maintien de charge (22) et la connexion (17', 18') des lignes de service (17, 18) avec la source de pression (P) et le réservoir (R), est agencée soit la vanne directionnelle (43, 44) constituée comme une vanne 4/2 voies précontrainte par ressort avec un actionneur électromagnétique ou mécanique (48, 47 ; 53), soit la vanne directionnelle (43, 44) constituée comme une vanne 4/2 voies comportant un dispositif de verrouillage de position de commutation (55) avec deux actionneurs électromagnétiques (48, 48').

7. Réflecteur solaire selon la revendication 5 ou 6, **caractérisé en ce qu'**une vanne 4/2 voies d'étape d'urgence (59) précontrainte par ressort avec un actionneur électromagnétique (50) est pourvue entre les lignes de service (17, 18) et respectivement la source de pression (P) et le réservoir (R).

8. Réflecteur solaire selon au moins l'une des revendications précédentes, **caractérisé en ce que** la vanne d'activation respective (36) d'un vérin hydraulique (Z1, Z2) comporte comme vanne directionnelle (43, 44) une autre paire de vannes à siège 3/2 voies (56, 57) qui distribuent pour un sens de commutation d'un actionneur électromagnétique ou mécanique commun (48, 53), et se combinent avec les vannes à siège 3/2 voies (38, 39) de ladite paire pour assurer une fonction de vanne 5/3 voies et sont connectées avec celles-ci entre ladite une paire de vannes à siège 3/2 voies (38, 39) et les vannes de maintien de charge (22).

9. Réflecteur solaire selon la revendication 8, **caractérisé en ce que** chaque vanne à siège 3/2 voies (56, 57) de l'autre paire est agencée sur une ligne de réservoir (19) connectée à la vanne à siège 3/2 voies respective (38, 39) de ladite une paire, et connectée à une ligne de service (17, 18) du vérin hydraulique, et bloque sans fuite la connexion de ligne de service (60) dirigée vers la vanne de maintien de charge respective (22) dans la position ouverte de la ligne de réservoir.

10. Réflecteur solaire selon la revendication 8, **caractérisé en ce que** les vannes à siège 3/2 voies (56, 57) de l'autre paire comportent respectivement un dispositif de verrouillage de position de commutation (55) et distribuent, pour chaque sens de commutation, vers un actionneur électromagnétique ou mécanique commun.

11. Réflecteur solaire selon au moins l'une des revendications précédentes, **caractérisé en ce que** l'actionneur mécanique respectif (53) interagit fonctionnellement avec une commande à came (54) qui détecte soit des courses et/ou des déplacements relatifs du vérin hydraulique respectif (Z1, Z2) vis-à-vis d'un support stationnaire (10), soit des déplacements relatifs d'un moyeu rotatif (5) du miroir (1) dans le support (10) ou vis-à-vis du vérin hydraulique respectif (Z1, Z2) dans la plage de réglage du miroir (1) et transfère vers l'actionneur (53).

12. Réflecteur solaire selon au moins l'une des revendications précédentes, **caractérisé en ce que** la source de pression (P) est associée à au moins un accumulateur de pression (24) avec un circuit de chargement de réservoir.
